(19)

**Europäisches Patentamt**

**European Patent Office**

**Office européen des brevets**

(11) **EP 4 057 396 A1**

(12) **EUROPÄISCHE PATENTANMELDUNG**

(43) Veröffentlichungstag:
**14.09.2022   Patentblatt 2022/37**

(21) Anmeldenummer: **21161921.8**

(22) Anmeldetag: **11.03.2021**

(51) Internationale Patentklassifikation (IPC):
**H01M 4/88** (2006.01)         **H01M 4/92** (2006.01)
**H01M 8/1018** (2016.01)

(52) Gemeinsame Patentklassifikation (CPC):
**H01M 4/926; H01M 4/8846; H01M 4/8882;**
H01M 2008/1095

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Heraeus Deutschland GmbH & Co. KG 63450 Hanau (DE)**

(72) Erfinder:
• **STOICA, Leonard**
  **63450 Hanau (DE)**
• **SIEVI, Robert**
  **63450 Hanau (DE)**
• **EWEINER, Florian**
  **63450 Hanau (DE)**

(74) Vertreter: **Heraeus IP**
**Heraeus Business Solutions GmbH**
**Intellectual Property**
**Heraeusstraße 12-14**
**63450 Hanau (DE)**

(54) **VERFAHREN ZUR HERSTELLUNG EINES MIT EDELMETALL AUSGESTATTETEN GRAPHITISIERTEN KOHLENSTOFFMATERIALS UND TRÄGERKATALYSATOR**

(57)    Bei der vorliegenden Erfindung handelt es sich um ein Verfahren zur Herstellung eines mit Edelmetall ausgestatteten, graphitisierten Kohlenstoffmaterials umfassend das Bereitstellen eines graphitisierten Kohlenstoffmaterials, wobei das graphitisierte Kohlenstoffmaterial einen Graphitisierungsgrad von mindestens 10 % aufweist, das Imprägnieren des graphitisierten Kohlenstoffmaterials mit einer Zusammensetzung, und eine thermische Behandlung des imprägnierten graphitisierten Kohlenstoffmaterials. Die Zusammensetzung umfasst ein organisches Lösungsmittel und mindestens einen in dem organischen Lösungsmittel gelösten organischen Edelmetallkomplex. Außerdem betrifft die Erfindung einen nach diesem Verfahren hergestellten Trägerkatalysator sowie eine elektrochemische Zelle, die diesen Trägerkatalysator enthält.

50 nm

Abbildung 2

EP 4 057 396 A1

**Beschreibung**

Die vorliegende Erfindung betrifft ein Verfahren zur Ausstattung eines graphitisierten Kohlenstoffmaterials mit Edelmetall, einen durch das Verfahren hergestellten Trägerkatalysator und eine elektrochemische Zelle enthaltend den Trägerkatalysator.

Mit Edelmetall ausgestattete Kohlenstoffe werden in einer Vielzahl unterschiedlicher technischer Gebiete eingesetzt, beispielsweise bei der Abgasreinigung, der Energiegewinnung oder in der chemischen Verfahrenstechnik zur Synthese oder Veränderung von Substanzen; insbesondere kommen sie auch in elektrochemischen Zellen, beispielsweise Brennstoffzellen und anderen elektrochemischen Energiewandlern, zum Einsatz.

Unter Trägerkatalysatoren versteht man im Allgemeinen Katalysatoren, die ein Trägermaterial enthalten, dessen Oberfläche mit einem katalytisch wirksamen Werkstoff in hochdisperser Form ausgestattet ist. Solche Werkstoffe können beispielsweise Edelmetalle sein, vor allem Platin hat sich für in elektrochemischen Anwendungen als geeignet erwiesen. Die Reaktionen, die mit solchen Trägerkatalysatoren katalysiert werden, sind typischerweise Oberflächenreaktionen. Daher ist die verfügbare Oberfläche der katalytisch aktiven Spezies von entscheidender Bedeutung und sollte so groß wie möglich sein.

Das Aufbringen eines Edelmetalls auf Kohlenstoffmaterialien als Trägermaterial erfolgt meist durch Tränken bzw. Imprägnieren der Träger mit Lösungen von Salzen oder Komplexverbindungen des Edelmetalls und anschließendem Immobilisieren durch Ausfällen, Hydrolysieren, Tempern, Calcinieren und/oder Formieren. Die EP3473337A1 beschreibt beispielsweise die Ausstattung von Kohlenstoffträgern mit metallischem Platin, wobei der Kohlenstoffträger zunächst mit einer wässrigen Lösung eines Platinvorläufers imprägniert wird. Der imprägnierte Kohlenstoffträger wird anschließend thermisch behandelt, wobei Platin-Nanopartikel entstehen.

Unter einem graphitisierten Kohlenstoff ("*graphitized carbon"*) wird ein Kohlenstoffmaterial verstanden, das als Resultat einer thermischen Behandlung eines graphitisierbaren Ausgangsmaterials bei hoher Temperatur zumindest teilweise eine Graphitstruktur aufweist, siehe z.B. H.B. Böhm et al., Pure & Appl. Chem., 67, 1995, S. 473-506. Eine hoher Graphitisierungsgrad hat sich vor allem für elektrochemische Anwendungen als vorteilhaft herausgestellt, da die Korrosionsstabilität eines solchen Materials erhöht ist. Beispielsweise die EP2352195A1 und die JP200526174A beschreiben die vorteilhafte Verwendung solcher hoch graphitisierter Kohlenstoffmaterialien als Trägermaterialien. In der US7687187B2 wird dazu erläutert, dass ein noch höherer Graphitisierungsgrad zu einer Stabilisierung des Kohlenstoffträgers in der Anwendung als Katalysator in einer Brennstoffzelle führt. Ein "hoher Graphitisierungsgrad" wird hier durch einen Basalebenenabstand $d002$ von weniger als 0,338 nm definiert.

Prinzipiell kann die Graphitisierung vor und nach der Ausstattung des porösen Kohlenstoffmaterials mit der katalytisch aktiven Spezies erfolgen. Eine Graphitisierung nach Ausstattung mit einer Edelmetallspezies kann allerdings zu einer Aggregation der Edelmetallpartikel führen, was wiederum die katalytisch aktive Oberfläche verringern kann.

Ein hoher Graphitisierungsgrad geht häufig mit einer erhöhten Hydrophobizität einher, was die Möglichkeiten von wässrigen Imprägnierungsmethoden beschränkt. Dies kann eine hochdisperse Verteilung der katalytisch aktiven, edelmetallhaltigen Partikel auf dem Trägermaterial verhindern. Die Folge ist eine geringere katalytische Oberfläche und damit eine geringere katalytische Aktivität des Katalysators.

Aufgabe der vorliegenden Erfindung war es, Verfahren zu finden, welche zur Herstellung eines mit Edelmetall ausgestatteten, graphitisierten Kohlenstoffmaterials verwendet werden können. Eine weitere Aufgabe war die Bereitstellung eines Trägerkatalysators hergestellt nach dem erfindungsgemäßen Verfahren. Außerdem war eine Aufgabe die Bereitstellung einer elektrochemischen Zelle, enthaltend diesen Trägerkatalysator.

Die Aufgabe wird gelöst durch ein Verfahren zur Herstellung eines mit Edelmetall ausgestatteten, graphitisierten Kohlenstoffmaterials umfassend die folgenden Verfahrensschritte:

(a) Bereitstellen eines graphitisierten Kohlenstoffmaterials, wobei das graphitisierte Kohlenstoffmaterial einen Graphitisierungsgrad von mindestens 10 % aufweist,
(b) Imprägnieren des graphitisierten Kohlenstoffmaterials mit einer Zusammensetzung, wobei die Zusammensetzung

(i) ein organisches Lösungsmittel und
(ii) mindestens einen in dem organischen Lösungsmittel gelösten organischen Edelmetallkomplex umfasst,

(c) thermische Behandlung des imprägnierten graphitisierten Kohlenstoffmaterials.

Es hat sich herausgestellt, dass das erfindungsgemäße Verfahren besonders geeignet ist, um die Oberfläche von graphitisierten Kohlenstoffmaterialien homogen mit Edelmetall auszustatten. Der Begriff "Oberfläche" umfasst hierbei sowohl die äußere als auch die innere Oberfläche, mit anderen Worten ist auch die innenliegende durch Poren gebildete Oberfläche umfasst. Des Weiteren ist das erfindungsgemäße Verfahren besonders geeignet für graphitisierte Kohlenstoffmaterialien, die eine hohe Hydrophobizität aufweisen. Solche Materialien können aufgrund der geringen Affinität zu Wasser in der Behandlung mit wässrigen Lösungen problematisch sein, da sie beispielsweise nicht vollständig dispergiert werden können oder die wässrige Lösung vorhandene Poren nicht vollständig benetzt.

Das Edelmetall, mit dem das graphitisierte Kohlenstoffmaterial ausgestattet wird, ist bevorzugt mindestens ein Metall der Platinmetallgruppe, jedoch sind Platin, Palladium, Rhodium und Iridium bevorzugt. Dabei sind auch alle Kombinationen der genannten Edelmetalle denkbar.

Unter "mit Edelmetall ausgestattet" ist zu verstehen, dass das Edelmetall auf oder an dem graphitisierten Kohlenstoffmaterial vorliegt, beispielsweise in Form von Partikeln oder einer Schicht, wobei diese Schicht geschlossen oder nicht-geschlossen vorliegen kann.

In Verfahrensschritt (a) wird ein graphitisiertes Kohlenstoffmaterial bereitgestellt. Das graphitisierte Kohlenstoffmaterial weist einen Graphitisierungsgrad von mindestens 10 % auf.

Bevorzugt weist das graphitisierte Kohlenstoffmaterial einen Graphitisierungsgrad von mindestens 15 %, bevorzugter mindestens 25 % auf. Besonders bevorzugt weist das als graphitisierte Kohlenstoffmaterial einen Graphitisierungsgrad von 10 - 90 %, ganz besonders bevorzugt von 15 - 80 % auf.

Graphitisierte Kohlenstoffmaterialien sind dem Fachmann bekannt und lassen sich durch bekannte Verfahren herstellen oder sind kommerziell erhältlich. Beispielsweise wird ein Kohlenstoffmaterial einer thermischen Behandlung (z.B. bei einer Temperatur im Bereich von 1400 °C bis 3000 °C) unterzogen, so dass sich in dem Kohlenstoffmaterial Bereiche mit Graphitstruktur ausbilden.

Das graphitisierte Kohlenstoffmaterial wird im Weiteren auch als Trägermaterial bezeichnet.

Wie dem Fachmann bekannt und beispielsweise in EP 2954951A1 beschrieben, lässt sich die Graphitisierung eines Kohlenstoffmaterials über Pulverdiffraktometrie bestimmen. Der Graphitisierungsgrad g (in %) wird dabei anhand der folgenden Formel (1) bestimmt:

$$g = [(344\ pm - d_{002}) / (344\ pm - 335{,}4\ pm)] \times 100 \qquad (1)$$

wobei $d_{002}$ der Graphit-Basalebenenabstand ist, der über die bekannte Bragg-Gleichung anhand des Beugungsreflexes der (002)-Ebene im Pulverdiffraktogramm des graphitisierten Kohlenstoffmaterials bestimmt wird.

In einer weiteren Ausführungsform weist das graphitisierte Kohlenstoffmaterial beispielsweise ein $L_a/L_c$-Verhältnis von mindestens 0,15 auf. Bevorzugt beträgt das Verhältnis von $L_a$ zu $L_c$ 0,15 bis 3,0, bevorzugter 0,15 bis 1,5 oder 0,15 bis 0,5. Wie dem Fachmann bekannt ist, sind $L_a$ und $L_c$ ein Maß für die mittleren Kristallitgrößen in paralleler Richtung ($L_a$) und in senkrechter Richtung ($L_c$) zu den Basalebenen der Graphitstruktur. Wie nachfolgend noch eingehender beschrieben wird, erfolgt die Bestimmung von $L_a$ und $L_c$ in bekannter Weise durch Pulverdiffraktometrie und Anwendung der Scherrer-Gleichung. Die Bestimmung des $L_a$-Werts erfolgt anhand des Beugungsreflexes der (100)-Ebene ("100-Beugungsreflex") und die Bestimmung des $L_c$-Werts erfolgt anhand des Beugungsreflexes der (002)-Ebene ("002-Beugungsreflex") im Pulverdiffraktogramm des graphitisierten Kohlenstoffmaterials.

In einer bevorzugten Ausführungsform ist das graphitisierte Kohlenstoffmaterial porös. Unter Poren werden im Sinne dieser Erfindung Mikroporen, Mesoporen und Makroporen verstanden. Mikroporen haben eine Porengröße im Bereich von weniger als 2 nm, Mesoporen haben eine Porengröße im Bereich von 2 bis 50 nm und Makroporen haben eine Porengröße im Bereich von 50 bis 5000 nm.

Bevorzugt wird unter der Porengröße die durchschnittliche Größe der Poren des porösen Materials verstanden. Dementsprechend wird bevorzugt unter Porenvolumen die Summe der Volumina solcher Poren verstanden.

In einer bevorzugten Ausführungsform weist das graphitisierte Kohlenstoffmaterial Mesoporen auf. Besonders bevorzugt liegt das Maximum der Porendurchmesserverteilung im Bereich der Mesoporen.

Besonders bevorzugt liegt das Maximum der Porendurchmesserverteilung im Bereich von 10 bis 200 nm auf, bevorzugt im Bereich von 15 bis 150 nm, bevorzugt kann auch ein Bereich von 10 bis 100 nm oder besonders bevorzugt ein Bereich von 15 bis 75 nm sein.

Das graphitisierte Kohlenstoffmaterial weist bevorzugt ein Porenvolumen von mehr als 0,1 cm$^3$/g auf, besonders bevorzugt mehr als 0,3 cm$^3$/g, ganz besonders bevorzugt mehr als 0,6 cm$^3$/g.

Das graphitisierte Kohlenstoffmaterial weist bevorzugt ein Porenvolumen von 0,1 cm$^3$/g bis 3,5 cm$^3$/g, bevorzugter 0,7 cm$^3$/g bis 2,5 cm$^3$/g auf, besonders bevorzugt 0,9 cm$^3$/g bis 1,8 cm$^3$/g.

Bevorzugt weist das poröse graphitisierte Kohlenstoffmaterial eine spezifische BET-Oberfläche von mehr als 10 m$^2$/g auf, bevorzugter mehr als 30 m$^2$/g, besonders bevorzugt mehr als 40 m$^2$/g.

Das graphitisierte Kohlenstoffmaterial weist beispielsweise eine spezifische BET-Oberfläche im Bereich von 5 m$^2$/g bis 1000 m$^2$/g, bevorzugt im Bereich von 10 m$^2$/g bis 200 m$^2$/g, besonders bevorzugt im Bereich von 20 m$^2$/g bis 150 m$^2$/g

Bevorzugt liegt das graphitisierte Kohlenstoffmaterial pulverförmig bzw. partikelförmig vor.

In einer bevorzugten Ausführungsform liegt der mittlere Partikeldurchmesser $d_{50}$ des graphitisierten Kohlen-

stoffmaterials im Bereich von 0,1 μm bis 100 μm, bevorzugt im Bereich von 0,3 μm bis 80 μm, besonders bevorzugt im Bereich von 0,5 μm bis 20 μm. Die Bestimmung der Partikelgrößen erfolgt mittels Laserbeugung gemäß ISO Standard 13320.

In einer bevorzugten Ausführungsform beträgt der $d_{90}$-Wert der Partikelgrößenverteilung des graphitisierte Kohlenstoffmaterials weniger als 20 μm, bevorzugt weniger als 15 μm, besonders bevorzugt weniger als 10 μm.

Bevorzugt weist das graphitisierte Kohlenstoffmaterial weniger als 25 ppm Verunreinigungen anders als Kohlenstoff auf, bevorzugt weniger als 20 ppm, besonders bevorzugt weniger als 18 ppm.

Bevorzugt weist das graphitisierte Kohlenstoffmaterial weniger als 25 ppm Verunreinigungen in Form von Eisen (Fe) auf, bevorzugt weniger als 20 ppm, besonders bevorzugt weniger als 15 ppm.

Die Herstellung eines graphitisierten Kohlenstoffmaterials wird beispielsweise in EP2954951A1 beschrieben. Dabei wird das graphitisierte poröse Kohlenstoffmaterial erhalten, indem eine organische Ausgangsverbindung zunächst einer Carbonisierung unter Erhalt eines carbonisierten Kohlenstoffmaterials unterzogen wird und dieses carbonisierte Kohlenstoffmaterial anschließend graphitisiert wird.

Geeignete graphitisierte Kohlenstoffmaterialien können durch Nach-Graphitisierung von kommerziell erhältlichen Materialien wie Ketjen Black von Nouryon erhalten werden oder sind auch kommerziell erhältlich, beispielsweise unter der Bezeichnung Porocarb® von Heraeus.

Es kann bevorzugt sein, das Trägermaterial einem Vorbehandlungsschritt zu unterziehen. Mögliche Vorbehandlungen sind beispielsweise die Aktivierung des graphitisierten Kohlenstoffmaterials durch eine Plasmabehandlung oder durch die Behandlung mit einer Säure.

In Verfahrensschritt (b) wird das graphitisierte Kohlenstoffmaterial mit einer Zusammensetzung imprägniert. Als Ergebnis des Schritts (b) wird ein imprägniertes Trägermaterial erhalten.

Bevorzugt ist die Zusammensetzung flüssig und weist eine niedrige Viskosität auf, beispielsweise eine Viskosität von weniger als 100 cP, weniger als 50 cP oder weniger als 40 cP bei 20 °C und 1013 hPa. Bevorzugt ist die Zusammensetzung kein Sol-Gel. Die Viskosität der Zusammensetzung kann durch Rotationsviskosimetrie nach dem Platte-Platte-Messprinzip mit einem Plattendurchmesser 25 mm, Messspalt 1 mm, Scherrate 36 min$^{-1}$ bestimmt werden, wobei der Viskositätswert nach einer Messdauer von 2 Minuten bestimmt wird.

Bevorzugt ist die Zusammensetzung eine klare Lösung, d.h. eine Flüssigkeit, die frei von Kolloiden oder Präzipitaten ist. Bevorzugt umfasst die Zusammensetzung nur eine einzige Phase, d.h. die einzelnen Bestandteile der Zusammensetzung sind vollständig homogen durchmischt. Mit anderen Worten handelt es sich bei der Zusammensetzung um eine nichtkolloidale Lösung.

Vorteilhaft bei der Ausstattung von graphitisierten Kohlenstoffmaterialien gemäß dem erfindungsgemäßen Verfahren ist, dass keine Zusammensetzungen verwendet werden, die kolloidales Edelmetall oder nanopartikuläres Edelmetall enthalten, so dass damit verbundene eventuelle Risiken vermieden werden können. Darunter ist die potentielle Toxizität von nanopartikulären Schwermetallen, unter anderem Pt, Pd, Ir, Rh zu verstehen.

Die in Schritt (b) verwendete Zusammensetzung umfasst ein organisches Lösungsmittel, im Weiteren auch als Komponente A bezeichnet.

In einer bevorzugten Ausführungsform umfasst die Zusammensetzung das organische Lösungsmittel zu 30 bis 90 Gew.-% (Gewichts-%).

Ein "organisches Lösungsmittel" bedeutet hierin, dass das Lösungsmittel mindestens eine flüssige Substanz umfasst, in welcher der mindestens eine organische Edelmetallkomplex löslich ist. Das organische Lösungsmittel umfasst demnach mindestens eine Substanz, welche bei 25 °C und 1013 hPa flüssig ist, in welcher der mindestens eine organische Edelmetallkomplex löslich ist. Das organische Lösungsmittel kann mehrere chemische Substanzen enthalten d. h. das organische Lösungsmittel kann auch ein Lösungsmittelgemisch sein.

Ein geeignetes organisches Lösungsmittel kann auf Grundlage der Löslichkeit des mindestens einen organischen Edelmetallkomplexes in dem organischen Lösungsmittel, der Kompatibilität mit dem gewünschten Imprägnierungsverfahren, und/oder den erforderlichen Benetzungseigenschaften in Bezug auf das Trägermaterial ausgewählt werden. Bevorzugt sollte das organische Lösungsmittel selbst nicht zu einer Veränderung des Trägermaterials, beispielsweise durch Auflösung oder chemische Reaktion mit dem Trägermaterial, führen.

Das organische Lösungsmittel kann aus einer Vielzahl üblicher organischer Lösemittel ausgewählt sein. Zweckmäßigerweise ist das organische Lösungsmittel unter den Verarbeitungsbedingungen der erfindungsgemäßen Zusammensetzung im Wesentlichen flüchtig, insbesondere gilt dies für das Stadium nach Imprägnierung eines Trägermaterials mit der Zusammensetzung.

In einer Ausführungsform hat das organische Lösungsmittel bei 1013 hPa einen Siedepunkt von 30 °C bis 250 °C, 30 °C bis 200 °C oder 100 °C bis 150 °C.

In einer Ausführungsform ist das organische Lösungsmittel ein protisches Lösungsmittel. In einer Ausführungsform ist das organische Lösungsmittel ein aprotisches Lösungsmittel.

Bevorzugte organische Lösungsmittel sind unpolare Substanzen, beispielsweise ungeladene organische Verbindungen. Hierbei kann es sich um reine Kohlenwasserstoffe oder Heteroatomhaltige Verbindungen, wie zum Beispiel Heteroalkane, Heteroaromaten und Heteroalkene handeln.

Beispiele für organische Lösungsmittel umfassen Aliphaten und Cycloaliphaten jeweils mit 5 bis 12 Kohlenstoffatomen; Halogenkohlenwasserstoffe wie Di-, Tri- und Tetrachlormethan; Aromaten; Araliphaten wie Toluol oder Xylol; Alkohole wie Ethanol, n-Propanol und Isopropanol; Ether; Glykolether wie Mono-C1-C4-alkylglykolether und Di-C1-C4-alkylglykolether, beispielsweise Ethylenglykolmono-C1-C4-alkylether, Ethylenglykoldi-C1-C4-alkylether, Diethylenglykolmono-C1-C4-alkylether, Diethylenglykoldi-C1-C4-alkylether, Propylenglykolmono-C1-C4-alkylether, Propylenglykoldi-C1-C4-alkylether, Dipropylenglykolmono-C1-C4-alkylether und Dipropylenglykoldi-C1-C4-alkylether; Ester mit 2 bis 12 Kohlenstoffatomen; und Ketone wie Aceton, Methylethylketon, Methylisobutylketon und Cyclohexanon. Araliphaten wie Toluol oder Xylol, Alkohole wie Ethanol, n-Propanol und Isopropanol und Glykolether wie Mono-C1-C4-alkylglykolether und Di-C1-C4-alkylglykolether, beispielsweise Ethylenglykolmono-C1-C4-alkylether, Ethylenglykoldi-C1-C4-alkylether, Diethylenglykolmono-C1-C4-alkylether, Diethylenglykoldi-C1-C4-alkylether, Propylenglykolmono-C1-C4-alkylether, Propylenglykoldi-C1-C4-alkylether, Dipropylenglykolmono-C1-C4-alkylether und Dipropylenglykoldi-C1-C4-alkylether sind dabei bevorzugt.

Besonders bevorzugt besteht Bestandteil A aus mindestens einem Alkohol, speziell mindestens einem der beispielhaft genannten Alkohole, und/oder aus mindestens einem Glykolether, speziell mindestens einem der beispielhaft genannten Glykolether. Insbesondere bevorzugt als Bestandteil A sind entsprechende Mischungen aus 30 bis 70 Gew.-% Alkohol und dem zu 100 Gew.-% fehlenden Gewichtsanteil Glykolether.

In einer Ausführungsform umfasst die Zusammensetzung einen Glykolether.
In einer Ausführungsform umfasst die Zusammensetzung einen Mono-C1-C4-alkylglykolether. In einer Ausführungsform umfasst die Zusammensetzung einen Di-C1-C4-alkylglykolether.

In einer Ausführungsform umfasst die Zusammensetzung einen Glykolether, der ausgewählt ist aus der Gruppe bestehend aus einem Ethylenglykolmono-C1-C4-alkylether, Ethylenglykoldi-C1-C4-alkylether, Diethylenglykolmono-C1-C4-alkylether, Diethylenglykoldi-C1-C4-alkylether, Propylenglykolmono-C1-C4-alkylether, Propylenglykoldi-C1-C4-alkylether, Dipropylenglykolmono-C1-C4-alkylether und einem Dipropylenglykoldi-C1-C4-alkylether.
In einer Ausführungsform umfasst die Zusammensetzung einen Glykolether und einen Alkohol. In einer Ausführungsform umfasst die Zusammensetzung einen Glykolether und einen Alkohol im Gewichtsverhältnis von 1:2 bis 2:1. Der Glykolether kann beispielsweise Propylenglykolmonopropylether sein. Der Alkohol kann beispielsweise Ethanol, n-Propanol, Isopropanol oder Butanol, oder ein mehrwertiger Alkohol sein.

Die Zusammensetzung enthält außerdem mindestens einen in dem organischen Lösungsmittel gelösten organischen Edelmetallkomplex, im Weiteren auch als Komponente B bezeichnet.

Bevorzugt enthält die Zusammensetzung als Bestandteil B 10 bis 70 Gew. % des mindestens einen organischen Edelmetallkomplexes.

In einer Ausführungsform umfasst die Zusammensetzung 2,5 bis 25 Gew.-% Edelmetall, bezogen auf das Gesamtgewicht der Zusammensetzung. In einer Ausführungsform umfasst die Zusammensetzung 5 bis 15 Gew.-%, 8 bis 15 Gew.-% oder 10 bis 15 Gew.-% Edelmetall bezogen auf das Gesamtgewicht der Zusammensetzung.

Der mindestens eine organische Edelmetallkomplex ist bevorzugt ein Edelmetallkomplex mit Diolefinligand L und C6-C18-Monocarboxylatliganden, bevorzugt ausgewählt aus der Gruppe bestehend aus Edelmetallkomplexen vom Typ $[LPt[O(CO)R1]X]_n$, $[LPd[O(CO)R1]X]_n$, $[LRh[O(CO)R1]]_m$ und $[LIr[O(CO)R1]]_m$, wobei L eine als Diolefinligand fungierende Verbindung bedeutet, wobei X ausgewählt ist unter Bromid, Chlorid, Iodid und -O(CO)R2, wobei -O(CO)R1 und -O(CO)R2 gleiche oder verschiedene nichtaromatische C6-C18-Monocarbonsäurereste bedeuten, und wobei n eine ganze Zahl $\geq$ 1 und m eine ganze Zahl $\geq$ 2 ist.

Der hierin verwendete Ausdruck "als Diolefinligand fungierende Verbindung" bezieht sich auf eine Verbindung, die in den Edelmetallkomplexen ihre beiden oder zwei ihrer olefinischen Doppelbindungen mit einem Edelmetallzentralatom komplexbildend oder mit zwei Edelmetallzentralatomen in verbrückender Weise komplexbildend bereitstellt.

Im Falle mehrkerniger Edelmetallkomplexe bedeuten die Zahlen n und m im Allgemeinen eine ganze Zahl beispielsweise im Bereich von 2 bis 5. Anders ausgedrückt, ganzzahliges n > 1 liegt im Allgemeinen im Bereich von 2 bis 5; insbesondere ist n dann gleich 2 und es handelt sich bei den Edelmetallkomplexen dann um zweikernige Platinkomplexe oder zweikernige Palladiumkomplexe. Auch ganzzahliges m liegt im Allgemeinen im Bereich von 2 bis 5; insbesondere ist m dann gleich 2 und es handelt sich bei den Edelmetallkomplexen dann um zweikernige Rhodiumkomplexe oder Iridiumkomplexe.

Das Platin liegt in den Platinkomplexen bevorzugt in der Oxidationsstufe +2 vor.
Das Palladium liegt in den Palladiumkomplexen bevorzugt in der Oxidationsstufe +2 vor.
Das Rhodium liegt in den Rhodiumkomplexen bevorzugt in der Oxidationsstufe +2 vor.
Das Iridium liegt in den Iridiumkomplexen bevorzugt in der Oxidationsstufe +2 vor.

Bei der Ausführungsform einkerniger Platinkomplexe vom Typ $[LPt[O(CO)R1]X]$ handelt es sich bei L um eine am Platinzentralatom als Diolefinligand fungierende Verbindung; X bedeutet Bromid, Chlorid, Iodid oder -O(CO)R2; und -O(CO)R1 und -O(CO)R2 bedeuten gleiche oder verschiedene nichtaromatische C6-C18-Monocarbonsäurereste. n ist hier gleich 1.

Bei der Ausführungsform einkerniger Palladiumkomplexe vom Typ [LPd[O(CO)R1]X] handelt es sich bei L um eine am Palladiumzentralatom als Diolefinligand fungierende Verbindung; X bedeutet Bromid, Chlorid, Iodid oder -O(CO)R2; und -O(CO)R1 und -O(CO)R2 bedeuten gleiche oder verschiedene nichtaromatische C6-C18-Monocarbonsäurereste. n ist hier gleich 1.

Bei einer bevorzugten Ausführungsform zwei- oder mehrkerniger Palladiumkomplexe vom Typ [LPd[O(CO)R1]X]$_n$ bedeutet L eine als Diolefinligand fungierende Verbindung; X bedeutet Bromid, Chlorid, Iodid oder -O(CO)R2; n bedeutet 2, 3, 4 oder 5, bevorzugt 2; und -O(CO)R1 und -O(CO)R2 bedeuten gleiche oder verschiedene nichtaromatische C6-C18-Monocarbonsäurereste.

Bei einer bevorzugten Ausführungsform zwei- oder mehrkerniger Edelmetallkomplexe vom Typ [LRh[O(CO)R1]]$_m$ respektive [LIr[O(CO)R1]]$_m$ bedeutet L eine als Diolefinligand fungierende Verbindung; m bedeutet 2, 3, 4 oder 5, bevorzugt 2; und -O(CO)R1 bedeutet einen nichtaromatischen C6-C18-Monocarbonsäurerest.

Beispiele für Diolefine respektive für Verbindungen vom Typ L, welche befähigt sind als Diolefinligand zu fungieren, umfassen Kohlenwasserstoffe wie COD (1,5-Cyclooctadien), NBD (Norbornadien), COT (Cyclooctatetraen) und 1,5-Hexadien, insbesondere COD und NBD. Bevorzugt handelt es sich um reine Kohlenwasserstoffe; die Anwesenheit von Heteroatomen beispielsweise auch in Form funktioneller Gruppen ist jedoch auch möglich.

X kann Bromid, Chlorid, Iodid oder -O(CO)R2 bedeuten, bevorzugt bedeutet es Chlorid oder - O(CO)R2, insbesondere -O(CO)R2.

Die jeweils nichtaromatischen Monocarbonsäurereste -O(CO)R1 und -O(CO)R2 bedeuten gleiche oder verschiedene nichtaromatische C6-C18-Monocarbonsäurereste. Der in diesem Zusammenhang verwendete Begriff "nichtaromatisch" schließt rein aromatische Monocarbonsäurereste aus, nicht jedoch araliphatische Monocarbonsäurereste, deren Carboxylfunktion(en) an aliphatischen Kohlenstoff gebunden ist/sind. Bevorzugt bedeuten - O(CO)R1 und -O(CO)R2 gleiche nichtaromatische C6-C18-Monocarbonsäurereste. Bevorzugt unter den nichtaromatischen C6-C18-Monocarbonsäureresten sind Monocarbonsäurereste mit 8 bis 18 Kohlenstoffatomen, d.h. nichtaromatische C8-C18-Monocarbonsäurereste.

Beispiele für nichtaromatische C6-C18- oder die bevorzugten C8-C18-Monocarbonsäuren mit Resten -O(CO)R1 respektive -O(CO)R2 umfassen die isomeren Hexansäuren einschließlich n-Hexansäure, die isomeren Heptansäuren einschließlich n-Heptansäure, die isomeren Octansäuren einschließlich n-Octansäure und 2-Ethylhexansäure, die isomeren Nonansäuren einschließlich n-Nonansäure, und die isomeren Decansäuren einschließlich n-Decansäure, um nur einige Beispiele zu nennen. Es sind nicht nur lineare Vertreter, sondern auch solche mit Verzweigungen und/oder cyclischen Strukturen umfasst, wie beispielsweise 2-Ethylhexansäure, Cyclohexancarbonsäure und Neodecansäure. Die jeweils an eine Carboxylgruppe gebundenen Reste R1 und R2 umfassen 5 bis 17 respektive 7 bis 17 Kohlenstoffatome.

Bevorzugte Beispiele für Platinkomplexe umfassen [(COD)Pt[O(CO)R1]2]$_n$ und [(NBD)Pt[O(CO)R1]2]$_n$, wobei n gleich 1 oder 2 und insbesondere gleich 1 ist, und wobei R1 für einen nichtaromatischen C5-C17-Kohlenwasserstoffrest steht.

Bevorzugte Beispiele für Palladiumkomplexe umfassen [(COD)Pd[O(CO)R1]2]$_n$ und [(NBD)Pd[O(CO)R1]2]$_n$, wobei n gleich 1 oder 2 und insbesondere gleich 1 ist, und wobei R1 für einen nichtaromatischen C5-C17-Kohlenwasserstoffrest steht.

Bevorzugte Beispiele für Rhodiumkomplexe umfassen [(COD)Rh[O(CO)R1]]$_m$ und [(NBD)Rh[O(CO)R1]]$_m$, wobei m gleich 2 ist, und wobei R1 für einen nichtaromatischen C5-C17-Kohlenwasserstoffrest steht.

Bevorzugte Beispiele für Iridiumkomplexe umfassen [(COD)Ir[O(CO)R1]]$_m$ und [(NBD)Ir[O(CO)R1]]$_m$, wobei m gleich 2 ist, und wobei R1 für einen nichtaromatischen C5-C17-Kohlenwasserstoffrest steht.

Bevorzugt ist der mindestens eine organische Edelmetallkomplex sowohl in polaren als auch in unpolaren Lösungsmitteln gut löslich. In einer Ausführungsform ist der mindestens eine organische Edelmetallkomplex sowohl in Lösungsmitteln mit mittlerer Polarität gut löslich. Lösungsmittel mit mittlerer Polarität sind beispielsweise kurzkettige Ether und Alkohole, sowie Glykolether.

In einer Ausführungsform beträgt die Löslichkeit des mindestens einen organischen Edelmetallkomplexes in Ethanol bei 25 °C und 1013 hPa mindestens 1, bevorzugt mindestens 2, 3, 4, 5, oder mindestens 10 Massenprozent.

In einer Ausführungsform beträgt die Löslichkeit des mindestens einen organischen Edelmetallkomplexes in Toluol bei 25 °C und 1013 hPa mindestens 1, bevorzugt mindestens 2, 3, 4, 5, oder mindestens 10 Massenprozent.

In einer Ausführungsform beträgt die Löslichkeit des mindestens einen organischen Edelmetallkomplexes in einem Lösungsmittelgemisch, welches acht Teile Ethanol und zwei Teile Wasser umfasst, bei 25 °C und 1013 hPa mindestens 1, bevorzugt mindestens 2, 3, 4, 5, oder mindestens 10 Massenprozent.

In einigen Ausführungsformen ist der mindestens eine organische Edelmetallkomplex praktisch unbegrenzt in dem organischen Lösungsmittel oder in einem der hierin genannten Lösungsmittel löslich. Dies bedeutet, dass der mindestens eine organische Edelmetallkomplex und das Lösungsmittel in beliebigem Verhältnis miteinander mischbar sind.

Die Löslichkeit des mindestens einen organischen Edelmetallkomplexes in dem Lösungsmittel kann beispielsweise bestimmt werden, indem bei 25 °C und 1013 hPa einer definierten Menge des mindestens einen organischen Edelmetallkomplexes das Lösungsmittel schrittweise in geringer Menge zugegeben wird, bis sämtlicher Feststoff gelöst ist.

Der mindestens eine organische Edelmetallkomplex kann auf einfachem Wege durch Ligandenaustausch hergestellt werden, insbesondere ohne dabei Carbonsäuresalze des Silbers zu verwenden. Das Herstellungsverfahren umfasst ein Durchmischen respektive Suspendieren oder Emulgieren eines Zweiphasensystems. Die eine Phase umfasst dabei ein Edukt vom Typ $[LPtX_2]_n$, respektive $LPdX_2$, $[LRhX]_2$ oder $[LIrX]_2$ jeweils mit X ausgewählt unter Bromid, Chlorid und Iodid, bevorzugt Chlorid, entweder als solches oder bevorzugt in Form einer zumindest im Wesentlichen nicht wassermischbaren organischen Lösung eines solchen Eduktes. Beispiele für zur Herstellung einer derartigen organischen Lösung geeignete und zumindest im Wesentlichen nicht wassermischbare organische Lösemittel umfassen neben Aromaten und chlorierten Kohlenwasserstoffen wie Toluol, Xylol, Di-, Tri- und Tetrachlormethan auch sauerstoffhaltige Lösemittel, beispielsweise entsprechende nicht wassermischbare Ketone, Ester und Ether. Die andere Phase hingegen umfasst beispielsweise eine wässrige Lösung von Alkalisalz (insbesondere Natrium- oder Kaliumsalz) und/oder von Magnesiumsalz einer C6-C18-Monocarbonsäure vom Typ R1COOH sowie gegebenenfalls zusätzlich vom Typ R2COOH. Die Wahl der Art des oder der Monocarbonsäuresalze richtet sich nach der Art des herzustellenden Edelmetallkomplexes oder der herzustellenden Gesellschaft von Edelmetallkomplexen. Die beiden Phasen werden intensiv unter Bildung einer Suspension oder Emulsion durchmischt, beispielsweise durch Schütteln und/oder Rühren. Das Durchmischen wird zwecks Aufrechterhaltung des Suspensions- oder Emulsionszustandes beispielsweise für eine Zeitdauer von 0,5 bis 24 Stunden durchgeführt, beispielsweise bei einer Temperatur im Bereich von 20 bis 50 °C. Dabei findet der Ligandenaustausch statt, wobei sich der oder die gebildeten Edelmetallkomplexe in der organischen Phase lösen, während sich das ebenfalls gebildete AlkaliX-Salz oder $MgX_2$-Salz in der wässrigen Phase löst. Nach beendetem Suspendieren oder Emulgieren werden organische und wässrige Phase voneinander getrennt. Aus der organischen Phase können der oder die gebildeten Edelmetallkomplexe gewonnen und gegebenenfalls anschließend mittels üblicher Methoden gereinigt werden.

So kann beispielsweise, um nur ein konkretes Beispiel zu nennen, $(COD)Pt[O(CO)CH(C_2H_5)C_4H_9]_2$ durch gemeinsames Emulgieren einer Lösung von $(COD)PtCl_2$ in Dichlormethan mit einer wässrigen Lösung von Natrium-2-ethylhexanoat hergestellt werden. Nach beendetem Emulgieren kann die dabei durch Ligandenaustausch gebildete Kochsalzlösung von der Dichlormethanphase abgetrennt und aus letzterer das $(COD)Pt[O(CO)CH(C_2H_5)C_4H_9]_2$ isoliert und gegebenenfalls durch übliche Reinigungsverfahren aufgereinigt werden. Analog kann beispielsweise bei entsprechend gewählter Stöchiometrie auch der Platinkomplex $(COD)Pt[O(CO)CH(C_2H_5)C_4H_9]Cl$ hergestellt werden.

Eine wichtige Eigenschaft neben vorerwähnter Löslichkeit in üblichen organischen Lösemitteln ist die vergleichsweise niedrige Zersetzungstemperatur des mindestens einen organischen Edelmetallkomplexes des Bestandteils B, beispielsweise schon ab 150 °C bis 250 °C, häufig nicht höher als 200 °C. Diese Eigenschaftskombination erlaubt es, solche Edelmetallkomplexe als Bestandteil B der Zusammensetzung zur Ausstattung von graphitisierten Kohlenstoffmaterialien zu verwenden.

In einer Ausführungsform kann besagter mindestens eine organische Edelmetallkomplex in der Zusammensetzung in individualisierter aber auch in vergesellschafteter Form vorliegen, also alleine oder auch als Gemisch mehrerer verschiedener Spezies. So können Platinkomplexe in individualisierter oder in vergesellschafteter Form, also alleine oder als Gemisch mehrerer verschiedener Spezies jeweils vom Typ $[LPt[O(CO)R1]X]_n$ in der Zusammensetzung vorliegen. Es können auch Palladiumkomplexe in individualisierter oder in vergesellschafteter Form, also alleine oder als Gemisch mehrerer verschiedener Spezies jeweils vom Typ $[LPd[O(CO)R1]X]_n$ in der Zusammensetzung, vorliegen. Es können auch Rhodiumkomplexe in individualisierter oder in vergesellschafteter Form, also alleine oder als Gemisch mehrerer verschiedener Spezies jeweils vom Typ $[LRh[O(CO)R1]]_m$ in der Zusammensetzung vorliegen. Nicht anders können auch Iridiumkomplexe in individualisierter oder in vergesellschafteter Form, also alleine oder als Gemisch mehrerer verschiedener Spezies jeweils vom Typ $[LIr[O(CO)R1]]_m$ in der Zusammensetzung vorliegen. Mit anderen Worten, Bestandteil (B) kann Verbindungen vom Typ $[LPt[O(CO)R1]X]_n$, $[LPd[O(CO)R1]X]_n$, $[LRh[O(CO)R1]]_m$ und/oder vom Typ $[LIr[O(CO)R1]]_m$ umfassen. Bestandteil B kann demnach Verbindungen nur eines der, zweier der, drei der oder alle vier hier offenbarten Typen umfassen, wobei der jeweilige Typ in nur einer individuellen Form (individualisiert) oder in mehr als einer individuellen Form (vergesellschaftet) vertreten sein kann. Der hier in diesem Zusammenhang verwendete Begriff "individuelle Form" bezeichnet den Formeltyp mit konkretem Index n respektive m; beispielsweise ist $[LRh[O(CO)R1]]_2$ die individuelle Form des allgemeinen Typs $[LRh[O(CO)R1]]_m$ mit m = 2.

In einer Ausführungsform kann die Zusammensetzung die folgenden Bestandteile umfassen:

(A) 30 bis 90 Gew.-% (Gewichts-%) mindestens eines organischen Lösemittels,
(B) 10 bis 70 Gew.-% mindestens eines in dem Lösungsmittel gelösten organischen Edelmetallkomplexes.

Bevorzugte Zusammensetzungen können durch einfaches Vermischen der Bestandteile A und B hergestellt werden. Der Fachmann wählt dabei das Mengenverhältnis der Bestandteile angepasst an den jeweiligen Verwendungszweck und/oder die dabei zur Anwendung kommende Imprägnierungsmethode aus.

Als Ergebnis des Imprägnierschritts wird ein imprägniertes (d.h. mit dem mindestens einen organischen Edelmetallkomplex beladenes) Trägermaterial erhalten. Unter Imprägnierung wird hierbei die Adsorption des mindestens einen organischen Edelmetallkomplexes auf der Oberfläche des Trägermaterials verstanden. Im Fall eines porösen Kohlenstoffmaterials, handelt es sich dabei insbesondere um eine innere, d.h. innerhalb der Poren liegende Oberfläche.

Dem Fachmann sind verschiedene Imprägnierverfahren bekannt, beisielsweise kapillarkontrolliertes (incipient wetness) oder diffusionskontrolliertes Imprägnieren.

Bevorzugt werden Zusammensetzung und graphitisiertes Kohlenstoffmaterial während des Imprägnierschritts gerührt, gewalzt, geknetet oder anderweitig durchmischt.

Bevorzugt liegt das Trägermaterial während des Imprägnierschritts dispergiert in der Zusammensetzung vor.

Während des Imprägnierschritts beträgt die Temperatur der Zusammensetzung beispielsweise 20 °C bis 95 °C, bevorzugter 40 °C bis 90 °C oder 60 °C bis 80 °C, insbesondere 50 °C bis 70 °C.

Die Dauer des Imprägnierschritts wird so gewählt, dass sich der mindestens eine organische Edelmetallkomplex in ausreichender Menge auf dem Trägermaterial abscheiden kann. Eine geeignete Zeitdauer kann der Fachmann anhand von Routineversuchen ermitteln.

Das Trägermaterial liegt während des Imprägnierschritts beispielsweise in einer Menge von 1 Gew.-% bis 70 Gew.-%, bevorzugter 3 Gew.-% bis 60 Gew.-% vor, am bevorzugtesten 5 Gew.-% bis 50 Gew.-% vor bezogen auf das Gesamtgewicht von Zusammensetzung und Trägermaterial.

Das Trägermaterial und das dem mindestens einen organischen Edelmetallkomplex entstammende Edelmetall liegen während des Imprägnierschritts in einem Gewichtsverhältnis von mindestens 1 : 1 vor, bevorzugter in einem Gewichtsverhältnis von mindestens 2 : 1. In einem Verhältnis von mindestens 1 : 1 bedeutet hierbei, dass mindestens 50 Gewichtsprozent des Gewichts bestehend aus dem Gewicht des Trägermaterials und dem Gewicht des aus dem mindestens einen organischen Edelmetallkomplex stammenden Edelmetalls vom Gewicht des Trägermaterials ausgemacht werden.

Optional kann das imprägnierte Trägermaterial vor Durchführung der thermischen Behandlung in Schritt (c) zunächst getrocknet und dabei teilweise oder vollständig vom organischen Lösungsmittel befreit werden.

Bevorzugt kann auch sein, das imprägnierte Trägermaterial abzufiltrieren und zu trocknen.

Die Trocknung des imprägnierten Trägermaterials erfolgt beispielsweise bei einer Temperatur unterhalb von 250 °C, bevorzugter unterhalb von 200 °C, noch bevorzugter unterhalb von 150 °C

Insbesondere kann die Trocknung unter vermindertem Druck erfolgen, bevorzugt bei einem Druck von unter 100 mbar.

Bevorzugt erfolgt die Trocknung für einen Zeitraum von 30 Minuten bis 180 Minuten, bevorzugt für einen Zeitraum von 60 Minuten bis 120 Minuten.

Bevorzugt erfolgt die Trocknung unter Ausschluss von Sauerstoff, beispielsweise unter Vakuum oder unter Inertgas.

In Verfahrensschritt (c) wird das imprägnierte graphitisierte Kohlenstoffmaterial thermisch behandelt.

In einer Ausführungsform führt die thermische Behandlung des imprägnierten graphitisierten Kohlenstoffmaterials zur Zersetzung des mindestens einen organischen Edelmetallkomplexes.

Bevorzugt führt die thermische Behandlung zu einer rückstandsfreien Zersetzung des mindestens einen organischen Edelmetallkomplexes. Unter rückstandsfreier Zersetzung ist hierbei zu verstehen, dass die organischen Bestandteile des Komplexes zersetzt sind, sprich sich vollständig in flüchtige Komponenten zersetzt haben.

Die thermische Behandlung kann oberhalb der Zersetzungstemperatur des mindestens einen organischen Edelmetallkomplexes durchgeführt werden. Im Allgemeinen wird eine Temperatur geringfügig oberhalb der betreffenden Zersetzungstemperatur gewählt.

Die thermische Behandlung kann insbesondere in einem geschlossenen Gefäß erfolgen.

Die thermische Behandlung wird bevorzugt unter Abwesenheit von Sauerstoff durchgeführt. Insbesondere kann die thermische Behandlung in einer Inertgasatmosphäre oder unter Vakuum durchgeführt werden.

In einer Ausführungsform führt die thermische Behandlung zum Verdampfen des Lösungsmittels. In einer Ausführungsform wird durch die thermische Behandlung das Lösungsmittel verdampft und der mindestens eine organische Edelmetallkomplex vollständig zersetzt. In einer Ausführungsform verbleibt nach der thermischen Behandlung des imprägnierten Trägermaterials außer dem mindestens einen Edelmetall im Wesentlichen kein weiterer Bestandteil der Zusammensetzung auf dem Trägermaterial.

Die thermische Behandlung kann bei einer Temperatur von weniger als 1000 °C, 900 °C, 800 °C, 700 °C, 600 °C, 500 °C, 400 °C, 300 °C, 250 °C oder weniger als 200 °C stattfinden. Bevorzugt wird das imprägnierte Trägermaterial bei einer Temperatur von mehr als 220 °C thermisch behandelt, besonders bevorzugt bei einer Temperatur höher als 250 °C.

In einer bevorzugten Ausführungsform wird das imprägnierte Trägermaterial bei einer Temperatur von 150 °C bis 250 °C thermisch behandelt.

Im Allgemeinen dauert die thermische Behandlung nicht länger als 90 Minuten. Die thermische Behandlung kann für einen Zeitraum von 1 Minute bis 90 Minuten erfolgen, bevorzugt für 5 Minuten bis 60 Minuten.

Bei Vorhandensein mehrerer verschiedener Edelmetallkomplexe wird der Fachmann die thermische Behandlung oberhalb der Zersetzungstemperatur des Edelmetallkomplexes mit der höchsten Zersetzungstemperatur wählen. Im Allgemeinen wird dazu beispielsweise kurzzeitig bei einer Temperatur oberhalb der Zersetzungstemperatur behandelt, beispielsweise für einen Zeitraum von 1 Minute bis 60 Minuten auf eine Temperatur im Bereich von 200 °C bis 250 °C oder von 250 °C bis 300 °C oder höher, beispielsweise bis 1000 °C.

Beim Arbeiten mit Zusammensetzungen auf Basis von Platinkomplexen vom Typ $[LPt[O(CO)R1]X]_n$ oder Palladiumkomplexen vom Typ $[LPd[O(CO)R1]X]_n$ bildet sich bei der thermischen Zersetzung selbst bei Gegenwart von Luft als umgebender Atmosphäre im Wesentlichen metallisches Edelmetall; bei der thermischen Zersetzung im Fall des Arbeitens mit Zusammensetzungen auf Basis von Rhodiumkomplexen vom Typ $[LRh[O(CO)R1]]_n$ respektive auf Basis von Iridiumkomplexen vom Typ $[LIr[O(CO)R1]]_n$ hingegen kann sich bei Gegenwart von Sauerstoff neben dem metallischen Edelmetall auch das entsprechende Edelmetalloxid oder sogar hauptsächlich Edelmetalloxid bilden.

Insofern versteht der Fachmann den hierin verwendeten Ausdruck "mit Edelmetall ausgestattet" als im Wesentlichen oder sogar nur metallisches Platin oder Palladium umfassend, als Rhodium und/oder Rhodiumoxid umfassend oder als Iridium und/oder Iridiumoxid umfassend.

Falls die Zusammensetzung eine Kombination zweier oder mehrerer der hierin als Bestandteil B offenbarten Edelmetallkomplex-Typen umfasst, kann das Trägermaterial quasi simultan auch mit mehr als einem Edelmetall ausgestattet werden. Die Mengenverhältnisse von Platin, Palladium, Rhodium und Iridium können dabei sehr einfach variabel über die jeweiligen Mengenanteile der Edelmetallkomplexe in der Zusammensetzung eingestellt werden.

Das mit dem erfindungsgemäßen Verfahren mit Edelmetall ausgestattete graphitisierte Kohlenstoffmaterial enthält das Edelmetall beispielsweise in einer Menge von 5 Gew.-% bis 70 Gew.-% bevorzugter 15 Gew.-% bis 60 Gew.-% oder 25 Gew.-% bis 50 Gew.-%, jeweils bezogen auf das Gesamtgewicht des mit Edelmetall ausgestatteten graphitisierten Kohlenstoffmaterials.

In einer bevorzugten Ausführungsform liegt das Edelmetall nach der thermischen Behandlung partikelförmig auf dem Trägermaterial vor.

Die mittlere Partikelgröße der edelmetallhaltigen Partikel auf dem graphitisierten Kohlenstoffmaterial liegt vorzugsweise im Bereich von 1 - 100 nm, bevorzugter 2 - 50 nm, besonders bevorzugt im Bereich von 2,2 - 5,5 nm, gemessen mittels Röntgendiffraktometrie (XRD) und Bestimmung am (111)-Reflex.

Bevorzugt weisen die Edelmetall-Partikel einen mittleren Durchmesser von mindestens 0,5 nm auf, bevorzugter mindestens 1 nm.

Bevorzugt weisen die Edelmetall-Partikel einen mittleren Durchmesser von nicht mehr als 30 nm auf, bevorzugter nicht mehr als 20 nm, besonders bevorzugt nicht mehr als 10 nm.

Bevorzugt weisen die Edelmetall-Partikel einen mittleren Durchmesser im Bereich von 1,0 - 5,0 nm auf, bevorzugter im Bereich von 1,5 - 3,5 nm.

Bevorzugt weisen die Edelmetall-Partikel eine elektrochemische Oberfläche (ESCA) von 20 bis 200 m$^2$/g, vorzugsweise 25 bis 150 m$^2$/g auf.

In einer bevorzugten Ausführungsform wird das mit Edelmetall ausgestattete graphitisierte Kohlenstoffmaterial nach der thermischen Behandlung einem Waschschritt unterzogen.

Methoden zum Waschen eines partikelförmigen Materials sind dem Fachmann allgemein bekannt. Bevorzugt erfolgt das Waschen des Materials durch Dispergieren in einem Lösungsmittel, Abtrennen der festen Bestandteile und anschließendem Trocknen.

Dieser Waschschritt kann bei Bedarf wiederholt werden. Bevorzugt erfolgen solche mehrfachen Waschschritte mit unterschiedlichen Lösungsmitteln.

In einer bevorzugten Ausführungsform wird das mit Edelmetall ausgestattete graphitisierte Kohlenstoffmaterial nach der thermischen Behandlung einem Trocknungsschritt unterzogen.

In einer weiteren Ausführungsform wird das mit Edelmetall ausgestattete graphitisierte Kohlenstoffmaterial nach dem optionalen Waschschritt einem Trocknungsschritt unterzogen.

Die Trocknung des mit Edelmetall ausgestatteten graphitisierten Kohlenstoffmaterials erfolgt beispielsweise bei einer Temperatur unterhalb von 250 °C, bevorzugter unterhalb von 200 °C, noch bevorzugter unterhalb von 150 °C

Insbesondere kann das Trocknen unter vermindertem Druck erfolgen, bevorzugt bei einem Druck von unter 100 mbar.

Bevorzugt erfolgt das Trocknen über einen Zeitraum von 30 Minuten bis 180 Minuten, bevorzugt über einen Zeitraum von 60 Minuten bis 120 Minuten.

Ein weiterer Gegenstand der vorliegenden Erfindung sind als Trägerkatalysatoren verwendbare mit Edelmetall ausgestattetes graphitisiertes Kohlenstoffmaterialien, erhältlich durch eines der oben beschriebenen Verfahren. Für bevorzugte Ausführungsformen sei auf die obigen Ausführungen verwiesen.

Die erfindungsgemäß hergestellten Trägerkatalysatoren in Gestalt der mit Edelmetall ausgestatteten graphitisierten Kohlenstoffmaterialien sind beispielsweise besonders für den Einsatz in der PEM-Brennstoffzelle geeignet, sowohl als Anodenkatalysatoren als auch als Kathodenkatalysatoren. Bevorzugt werden die erfindungsgemäßen Materialien als Kathodenkatalysatoren in PEM-Brennstoffzellen eingesetzt.

Beim Einsatz von erfindungsgemäßen Trägerkatalysatoren als Elektrode in einer PEM-Brennstoffzelle entsteht bei der Katalyse der Sauerstoffreduktionsreaktion im Idealfall ausschließlich Wasser, aber nicht das korrosiv wirkende Wasserstoffperoxid ($H_2O_2$). Die Generierung von $H_2O_2$ wird durch den Einsatz von Katalysatormetall aus der Platingruppe wirksam unterdrückt.

Ebenfalls Gegenstand der vorliegenden Erfindung ist eine elektrochemische Zelle, enthaltend einen Trägerkatalysator in Gestalt von erfindungsgemäß mit Edelmetall ausgestatteten graphitisierten Kohlenstoffmaterialien. Für bevorzugte Ausführungsformen sei auch hier auf die obigen Ausführungen verwiesen.

Die elektrochemische Zelle ist bevorzugt eine Polymerelektrolyt (PEM)-Brennstoffzelle oder eine Polymerelektrolyt (PEM)-Elektrolysezelle (für die Wasserelektrolyse). Die erforderlichen Komponenten für den Aufbau einer PEM-Elektrolysezelle sind dem Fachmann bekannt. Die Polymerelektrolytmembran ("PEM") enthält beispielsweise ein Polymer, das aus Sulfonsäuregruppe-haltigen Monomeren aufgebaut ist.

Für die Herstellung von Elektroden, katalysatorbeschichteten Membranen (CCMs) und Membran-Elektroden-Einheiten (MEEs) für PEM-Brennstoffzellen werden die erfindungsgemäßen Trägerkatalysatoren zu Tinten oder Pasten verarbeitet, und zwar unter Verwendung geeigneter Lösungsmittel und ggf. unter Zusatz von Ionomermaterialien. Die Trägerkatalysatortinten werden auf Gasdiffusionssubstraten (GDLs), Stromkollektoren, Ionomermembranen, vorgeformten PTFE-Folien, Abziehbildern (sog. "Release papers") oder Separatorplatten und ähnlichem abgeschieden, wobei Verfahren wie Sprühen, Drucken, Rakeln oder sonstige Beschichtungsprozesse verwendet werden können. Entsprechende Verfahren sind dem Fachmann bekannt.

Weiterhin betrifft die vorliegende Erfindung die Verwendung des oben beschriebenen Trägerkatalysators für eine elektrochemische Reaktion.

Bei dieser elektrochemischen Reaktion handelt es sich beispielsweise um die elektrochemische Reduktion von Sauerstoff ("oxygen reduction reaction", ORR), die elektrochemische Oxidation von Wasserstoff ("hydrogen oxidation reaction", HOR), die elektrochemische Bildung von Sauerstoff aus Wasser ("oxygen evolution reaction", OER) oder die elektrochemische Bildung von Wasserstoff aus Wasser ("hydrogen evolution reaction", HER).

Nachfolgend sind die in der vorliegenden Erfindung verwendeten Messmethoden angegeben. Falls keine Testmethode angegeben ist, wurde die entsprechende ISO Methode zur Bestimmung des betreffenden Parameters verwendet, in der gültigen Fassung zum Anmelde-Zeitpunkt der vorliegenden Anmeldung. Falls keine spezifischen Messbedingungen angegeben sind, erfolgte die Messung bei Raumtemperatur (298.15 K) und Normaldruck (100 kPa).

Pulverdiffraktometrie

Der Graphitisierungsgrad und die Kristallitgrößen $L_a$ und $L_c$ wurden durch Pulverdiffraktometrie bestimmt.

Pulverdiffraktometrie wurde auf einem Stadi P Diffraktometer (STOE&Cie) in Pulver-Transmissionsgeometrie gemessen. Ein fokussierender Ge-111 Monochromator liefert monochromatische Kupfer $K_{alpha1}$ Röntgenstrahlung mit $\lambda$=1.54060 Å (Generatorparameter: 40kV, 30mA). Einige mg Probenmaterial wurden in einem Achatmörser fein zerkleinert, zwischen Cellophanfolien mit Weißleim fixiert, und in den STOE Transmissionsprobenhalter eingebaut. Der STOE IPPSD Detektor wurde verwendet. Die Proben wurden im Transmissionsprobenhalter in der Ebene senkrecht zum Röntgenstrahl mit 50-150rpm rotiert. Die STOE WinXPOW Software wurde zur Probenaufzeichnung verwendet. Messungen wurden in einem 2theta-Bereich von 8° bis 84° durchgeführt, die Aufnahmezeit betrug 8800 Sekunden. Die 2theta-Schrittweite ist 0.015°.

Graphitisierungsgrad

Der Graphitisierungsgrad g (in %) wird anhand der folgenden Formel (1) bestimmt:

$$g = [(344\ pm - d_{002}) / (344\ pm - 335,4\ pm)] \times 100 \qquad (1)$$

wobei $d_{002}$ der Graphit-Basalebenenabstand ist, der durch die bekannte Bragg-Gleichung anhand der Beugungslinie der (002)-Ebene im Pulverdiffraktogramm des graphitisierten Kohlenstoffmaterials bestimmt wird.
Die dem Fachmann bekannte Bragg-Gleichung lautet folgendermaßen:

$$d = (n * \lambda) / (2*sin\Theta)$$

wobei

λ die Röntgenwellenlänge ist;
n die Beugungsordung ist und
θ der Bragg-Winkel ist.

Bestimmung der Kristallitgrößen $L_a$ und $L_c$

Die Kristallitgrößen $L_a$ und $L_c$ wurden ermittelt, indem die Halbwertsbreite (FWHM) der 100 ($L_a$, 2theta=42.223°) und 002 ($L_c$, 2theta=26.382°) Reflexe der hexagonalen Graphitstruktur über einen Peakfit angepasst wurden. Hierfür wurde die STOE crystallinity analysis Software verwendet. Diese Software verwendet die dem Fachmann bekannte Scherrer-Methode bzw. Scherrer-Gleichung. Eine $LaB_6$ Probe wurde zur Ermittlung der instrumentellen Verbreiterung verwendet, diese instrumentelle Verbreiterung wurde vor der Berechnung vom gefitteten FWHM-Wert abgezogen. Die dem Fachmann bekannte Scherrer-Gleichung lautet folgendermaßen:

$$L = (K * λ) / ((β - β_{inst}) * cosΘ)$$

wobei

L die mittlere Kristallitgröße ist,
K ein Formfaktor ist,
λ die Röntgenwellenlänge ist,
β die Halbwertsbreite ("FWHM") des Reflexes ist,
$β_{inst}$ die Halbwertsbreite ("FWHM") des $LaB_6$-Standards ist
Θ der Bragg-Winkel ist.
Für La und Lc wird jeweils ein Formfaktor von 0,9 verwendet.

Spezifische BET-Oberfläche

Die spezifische BET-Oberfläche wurde mit Stickstoff als Adsorbat bei 77 K gemäß der BET-Theorie bestimmt (Mehrpunkt-Methode, ISO 9277:2010).

Porenvolumen und Porendurchmesserverteilung

Die Bestimmung des Porenvolumens und der Porendurchmesserverteilung erfolgten mit Quecksilberporosimetrie gemäß ISO 15901-1:2016.

Partikelgrößenverteilung ($d_{50}$, $d_{90}$)

Die Bestimmung der Partikelgrößen erfolgte mittels Laserbeugung gemäß ISO Standard 13320 mit einem Mastersizer 3000 (Malvern), ausgestattet mit einem He-Ne Laser (Wellenlänge: 632.8 nm, Maximalenergie 4 mW), einer blauen LED (Wellenlänge 470 nm, Maximalenergie 10 mW) und einer Nassdispergiereinheit (Hydro MV). Als Messmedium diente eine Mischung aus 50 Vol.%/ Isopropanol und 50 Vol.-% deionisiertem Wasser. Die volumengewichteten Werte für $d_{50}$ and $d_{90}$ wurden mittels der Malvern Software Mastersizer 3000 Software 3.30 unter Annahme von einem Formfaktor von 1 bestimmt. Für die Bestimmung von Partikeln mit einer Größe > 10 μm wurde die Fraunhofer-Theorie angewendet; für Partikel < 10 μm wurde die Mie-Theorie angewendet.

Thermogravimetrische Bestimmung des Edelmetallgehalts

Der Edelmetallgehalt wurde mit einer Thermowaage (TG209 Libra von Netzsch) bestimmt. Unter der Annahme, dass das Material nur aus Kohlenstoffträger und Edelmetall besteht, wurde dafür die Restmasse nach Behandlung bei 900 °C unter Luft bestimmt.

TEM-Aufnahmen

Die Verteilung der Edelmetallpartikel auf dem Trägermaterial wurde durch TEM (Transmissionselektronenmikroskopie) untersucht.

Es wurden wenige μg des zu untersuchenden Materials in Ethanol suspendiert. Anschließend wurde ein Tropfen der Suspension auf ein Kohle-Lochfilm-beschichtetes Cu-Plättchen (Plano, 200 mesh) pipettiert und getrocknet. Die Messungen wurden in einem FEI Talos 20-200 Transmissionsmikroskop bei 200 kV durchgeführt.

Größe der Edelmetallpartikel

Die Partikelgrößenverteilung der Edelmetallpartikel wurde über Röntgenkleinwinkelstreuung ermittelt. Das "Bragg-Brentano"-Gerät X'Pert Pro wird in Transmissionsgeometrie betrieben und der Primärstrahl mit einem Spiegel versehen, um einen kollimierten Strahl zu erzeugen. Katalysatormaterial (10-20 mg) wird zwischen zwei Mylar-Folien in einem Transmissionsprobenträger appliziert. Ein Probenhalter mit dem entsprechenden Trägermaterial wird für die Bestimmung des Untergrunds benötigt. Die Strahlenquelle war eine Cu-Röntgenröhre mit der Standardanregung von 40 kV & 40 mA und mit der Wellenlänge von 0,1542 nm.
Die erhaltenen Streukurven nach dem Untergrundabziehen wurden mittels PANalytical EasySAXSSoftware (Ver. 2.0) ausgewertet. Die Partikelgrößenverteilungskurven wurden mit den in dieser Software implementierten Algorithmen berechnet. Die aus dieser Bestimmung resultierende Verteilungskurve Dv(R) stellt die volumengewichtete Partikelgrößenverteilung dar (Verteilung nach Partikelvolumen). Anhand der Partikelgrößenverteilung der Edelmetallpartikel können die mittlere und häufigste Partikelgröße bestimmt werden.
Anhand der nachfolgenden Beispiele wird die Erfindung eingehender erläutert.

Beispiel 1 (erfindungsgemäße Ausstattung eines Kohlenstoffs mit Platin):

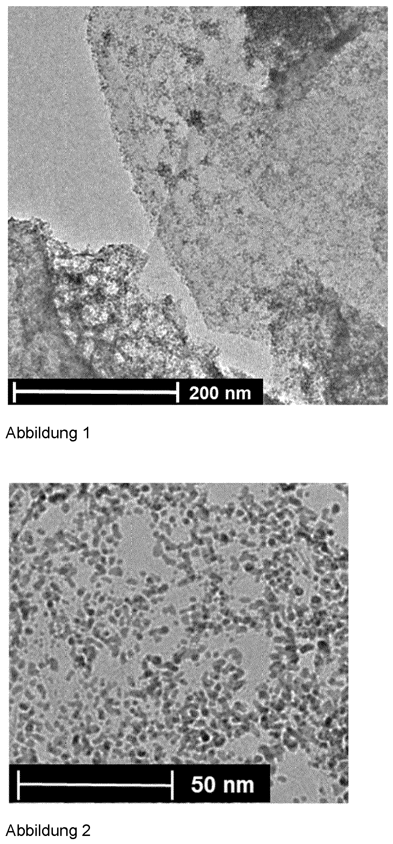

Eine Lösung von 65 mmol (COD)PtCl$_2$ in 100 mL Dichlormethan wurde gerührt und eine Lösung von 260 mmol Natrium-2-neodecanoat in 500 mL Wasser zugegeben. Die Zweiphasenmischung wurde 24 h bei 20 °C durch intensives Rühren emulgiert. Dabei färbte sich die Dichlormethanphase gelb. Die Dichlormethanphase wurde abgetrennt und das Lösungsmittel abdestilliert. Der zähflüssige, gelbe Rückstand wurde in 150 mL Petroleumbenzin (40-60) aufgenommen und die Lösung mit Magnesiumsulfat getrocknet und filtriert. Dann wurde das Petroleumbenzin vollständig abdestilliert. Zurück blieb ein zähflüssiger gelber Rückstand von (COD)Pt[O(CO)(CH$_2$)$_5$C(CH$_3$)$_3$]$_2$.
10 g des gelben Rückstandes wurden in 20 g einer Lösemittelmischung (50 Gew.-% Ethanol, 50 Gew.-% Propylenglykolmonopropylether) gelöst.
10 g Kohlenstoff (Heraeus Porocarb®; BET: 68 m$^2$/g; Graphitisierungsgrad: 73 %) wurden mit 100 mL der 10 Gew.-% Platin enthaltende Lösung versetzt und intensiv gerührt und über 30 min homogenisiert. Die homogene Mischung wurde in der Vorlage einer Destillationsapparatur unter reduziertem Druck (0,1 mbar) über einen Zeitraum von 60 min bei 250 °C behandelt. Das Lösungsmittel und die Zersetzungsprodukte wurden in der Vorlage aufgefangen und verworfen. Das Produkt wurde unter Ausschluss von Sauerstoff abgekühlt und unter N$_2$ gehalten.
Der Gewichtsanteil der Platinpartikel lag bei 40 % bezogen auf das Gesamtgewicht aus Kohlenstoff und Metall. Über Röntgenkleinwinkelstreuung wurde die Partikelgrößenverteilung der Platinpartikel ermittelt. Der mittlere Partikeldurchmesser wurde mit 1,6 nm bestimmt, der häufigste Partikeldurchmesser mit 1,8 nm. Vom dem mit Platin ausgestatteten Kohlenstoff wurden TEM-Aufnahmen mit unterschiedlichen Vergrößerungen gemacht. Abbildung 1 verdeutlicht eine sehr homogene Verteilung mit einem hohen Dispersionsgrad der metallischen Platinpartikel. Abbildung 2 zeigt repräsentativ eine Aufnahme in starker Vergrößerung, die die enge Größenverteilung der Platinpartikel demonstriert, auf die sich auch schon aus den Daten der Partikelgrößenbestimmung schließen ließ.

Vergleichsbeispiel 1 (Ausstattung eines Kohlenstoffs mit Platin)

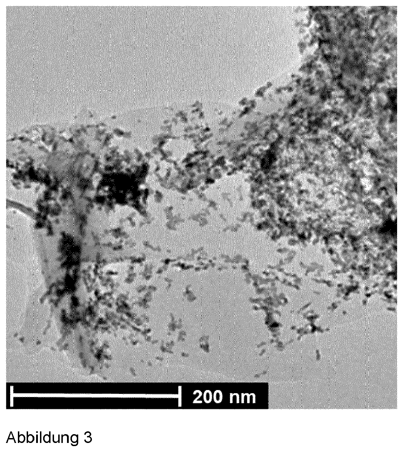

Der Kohlenstoff aus Beispiel 1 wurden mit 100 mL Wasser aufgeschlämmt, in einen Doppelmantelreaktor gegeben und mit Wasser auf 2 L aufgefüllt. Die Suspension wurde unter Rühren auf 70 °C aufgeheizt. Nach 1 h Haltezeit wurden 30 g einer salpetersauren Pt-NitratLösung (10 Gew.-% Pt) zudosiert und anschließend unter gleichbleibender Durchmischung und Temperatur 1 h gehalten. Anschließend wurden durch Zugabe von Na$_2$CO$_3$ der pH-Wert auf 1,5 eingestellt. Danach erfolgte die Zugabe von Ameisensäure im stöchiometrischen Überschuss. Nach 8 h Rühren bei 70 °C wurde der Feststoff aus dem wässrigen Medium abfiltriert, mit Wasser gewaschen und bei 110°C unter Stickstoffatmosphäre getrocknet.
Der Gewichtsanteil der Platinpartikel lag bei 30 % bezogen auf das Gesamtgewicht aus Kohlenstoff und Metall. Die repräsentative TEM-Aufnahme in Abbildung 3 zeigt im Vergleich zum erfindungsgemäß ausgestatteten Kohlenstoff eine geringere Homogenität der Metallpartikelverteilung und einen höheren Grad der Clusterung.

Beispiel 2 (erfindungsgemäße Ausstattung eines Kohlenstoffs mit Palladium):

Eine Lösung von 35 mmol (COD)PdCl$_2$ in 200 mL Dichlormethan wurde gerührt und eine Lösung von 140 mmol Natrium-2-ethylhexanoat in 150 mL Wasser zugegeben. Die Zweiphasenmischung wurde 24 h bei 20°C durch intensives Rühren emulgiert. Dabei färbte sich die Dichlormethanphase gelb. Die Dichlormethanphase wurde abgetrennt und das Lösungsmittel abdestilliert. Der zähflüssige, gelbe Rückstand wurde in Petroleumbenzin (40-60) aufgenommen und die Lösung mit Magnesiumsulfat getrocknet und filtriert. Dann wurde das Petroleumbenzin vollständig abdestilliert. Zurück blieb ein zähflüssiger gelber Rückstand von $(COD)Pd[O(CO)CH(C_2H_5)C_4H_9]_2$.

5 g des gelben Rückstandes wurden in 5,6 g einer Lösemittelmischung (50 Gew.-% Ethanol, 50 Gew.-% Propylenglykolmonopropylether) gelöst.

10 g Kohlenstoff wurden mit 100 mL der 10 Gew.-% Palladium enthaltende Lösung versetzt.

Die restliche Präparation erfolgte analog zur Beschreibung für Beispiel 1.

**Patentansprüche**

1. Verfahren zur Herstellung eines mit Edelmetall ausgestatteten, graphitisierten Kohlenstoffmaterials, umfassend folgende Verfahrensschritte:

   (a) Bereitstellen eines graphitisierten Kohlenstoffmaterials, wobei das graphitisierte Kohlenstoffmaterial einen Graphitisierungsgrad von mindestens 10 % aufweist,
   (b) Imprägnieren des graphitisierten Kohlenstoffmaterials mit einer Zusammensetzung, wobei die Zusammensetzung

      (i) ein organisches Lösungsmittel und
      (ii) mindestens einen in dem organischen Lösungsmittel gelösten organischen Edelmetallkomplex umfasst,

   (c) thermische Behandlung des imprägnierten graphitisierten Kohlenstoffmaterials.

2. Verfahren nach Anspruch 1, wobei das Edelmetall mindestens ein Metall der Platinmetallgruppe ist.

3. Verfahren nach Anspruch 1 oder 2, wobei die Zusammensetzung eine nichtkolloidale Lösung ist.

4. Verfahren nach einem der vorhergehenden Ansprüche, wobei die Zusammensetzung das organische Lösungsmittel zu 30 bis 90 Gewichts-% umfasst.

5. Verfahren nach einem der vorhergehenden Ansprüche, wobei die Zusammensetzung 10 bis 70 Gewichts-% des mindestens einen organischen Edelmetallkomplexes enthält.

6. Verfahren nach einem der vorhergehenden Ansprüche, wobei der mindestens eine organische Edelmetallkomplex ein Edelmetallkomplex mit Diolefinligand L und C6-C18-Monocarboxylatliganden ist.

7. Verfahren nach einem der vorhergehenden Ansprüche, wobei der mindestens eine organische Edelmetallkomplex ein Edelmetallkomplex ausgewählt aus der Gruppe bestehend aus Edelmetallkomplexen vom Typ $[LPt[O(CO)R1]X]_n$, $[LPd[O(CO)R1]X]_n$, $[LRh[O(CO)R1]]_m$ und $[LIr[O(CO)R1]]_m$, wobei X ausgewählt ist unter Bromid, Chlorid, Iodid und -O(CO)R2, wobei -O(CO)R1 und -O(CO)R2 gleiche oder verschiedene nichtaromatische C6-C18-Monocarbonsäurereste bedeuten, und wobei n eine ganze Zahl $\geq 1$ und m eine ganze Zahl $\geq 2$ ist.

8. Verfahren nach Anspruch 6 oder 7, wobei der Diolefinligand L ausgewählt ist aus der Gruppe bestehend aus COD (1,5-Cyclooctadien), NBD (Norbornadien), COT (Cyclooctatetraen) und 1,5-Hexadien.

9. Verfahren nach einem der vorhergehenden Ansprüche, wobei die Zusammensetzung 2,5 bis 25 Gewichts-% Edelmetall bezogen auf das Gesamtgewicht der Zusammensetzung umfasst.

10. Verfahren nach einem der vorhergehenden Ansprüche, wobei das Trägermaterial während des Imprägnierschritts in einer Menge von 1 bis 70 Gewichts-% vorliegt.

11. Verfahren nach einem der vorhergehenden Ansprüche, wobei das Trägermaterial und das dem mindestens einen organischen Edelmetallkomplex entstammende Edelmetall während des Imprägnierschritts in einem Gewichtsverhältnis von mindestens 1 : 1 vorliegen.

**12.** Verfahren nach einem der vorhergehenden Ansprüche, wobei die thermische Behandlung des imprägnierten graphitisierten Kohlenstoffmaterials zur Zersetzung des mindestens einen organischen Edelmetallkomplexes führt.

**13.** Ein mit Edelmetall ausgestattetes graphitisiertes Kohlenstoffmaterial, erhältlich mit dem Verfahren nach einem der Ansprüche 1 bis 12.

**14.** Mit Edelmetall ausgestattetes graphitisiertes Kohlenstoffmaterial nach Anspruch 13, enthaltend das Edelmetall in einer Menge von 5 bis 70 Gewichts-%.

**15.** Eine elektrochemische Zelle, enthaltend ein mit Edelmetall ausgestattetes graphitisiertes Kohlenstoffmaterial gemäß Anspruch 13 oder 14.

Abbildung 1

Abbildung 2

Abbildung 3

**Europäisches Patentamt**
**European Patent Office**
**Office européen des brevets**

# EUROPÄISCHER RECHERCHENBERICHT

Nummer der Anmeldung

EP 21 16 1921

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2015/189030 A1 (HERAEUS DEUTSCHLAND GMBH & CO KG [DE]) 17. Dezember 2015 (2015-12-17) * Zusammenfassung * | 1-3,5-15 | INV. H01M4/88 H01M4/92 H01M8/1018 |
| X,D | -& EP 2 954 951 A1 (HERAEUS DEUTSCHLAND GMBH & CO KG [DE]) 16. Dezember 2015 (2015-12-16) * Absätze [0024], [0086], [0087], [0128], [0130] * | 1-3,5, 9-15 | |
| | ----- | | |
| X | EP 3 764 443 A1 (HERAEUS DEUTSCHLAND GMBH & CO KG [DE]) 13. Januar 2021 (2021-01-13) * Absatz [0080]; Ansprüche 1, 4, 6, 9, 13-15 * | 1-3, 12-15 | |
| | ----- | | |
| X | JP S63 304576 A (FURUKAWA ELECTRIC CO LTD) 12. Dezember 1988 (1988-12-12) * Zusammenfassung; Anspruch 1; Beispiel 1 * | 1-3, 12-15 | |
| | ----- | | |
| X | EP 1 244 165 A2 (UBE INDUSTRIES [JP]) 25. September 2002 (2002-09-25) * Absätze [0075], [0076] * | 1-5, 12-15 | RECHERCHIERTE SACHGEBIETE (IPC) |
| | ----- | | H01M |

Der vorliegende Recherchenbericht wurde für alle Patentansprüche erstellt

| Recherchenort | Abschlußdatum der Recherche | Prüfer |
|---|---|---|
| München | 27. August 2021 | Martín Fernández, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 16 1921

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-08-2021

| Im Recherchenbericht angeführtes Patentdokument | Datum der Veröffentlichung | Mitglied(er) der Patentfamilie | Datum der Veröffentlichung |
|---|---|---|---|
| WO 2015189030 A1 | 17-12-2015 | CN 106457214 A<br>EP 2954951 A1<br>JP 6483161 B2<br>JP 2017524634 A<br>KR 20170020845 A<br>US 2017141405 A1<br>WO 2015189030 A1 | 22-02-2017<br>16-12-2015<br>13-03-2019<br>31-08-2017<br>24-02-2017<br>18-05-2017<br>17-12-2015 |
| EP 2954951 A1 | 16-12-2015 | CN 106457214 A<br>EP 2954951 A1<br>JP 6483161 B2<br>JP 2017524634 A<br>KR 20170020845 A<br>US 2017141405 A1<br>WO 2015189030 A1 | 22-02-2017<br>16-12-2015<br>13-03-2019<br>31-08-2017<br>24-02-2017<br>18-05-2017<br>17-12-2015 |
| EP 3764443 A1 | 13-01-2021 | EP 3764443 A1<br>WO 2021004716 A1 | 13-01-2021<br>14-01-2021 |
| JP S63304576 A | 12-12-1988 | KEINE | |
| EP 1244165 A2 | 25-09-2002 | AU 784328 B2<br>CN 1375886 A<br>EP 1244165 A2<br>KR 20020074422 A<br>US 2002132159 A1<br>US 2007082805 A1 | 09-03-2006<br>23-10-2002<br>25-09-2002<br>30-09-2002<br>19-09-2002<br>12-04-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3473337 A1
- EP 2352195 A1
- JP 200526174 A
- US 7687187 B2
- EP 2954951 A1

**In der Beschreibung aufgeführte Nicht-Patentliteratur**

- **H.B. BÖHM et al.** *Pure & Appl. Chem.,* 1995, vol. 67, 473-506